# EUROPÄISCHE PATENTSCHRIFT

(11) **EP 2 391 536 B1**
(45) Veröffentlichungstag und Bekanntmachung des Hinweises auf die Patenterteilung: **18.09.2013**
(21) Anmeldenummer: 10704341.6
(22) Anmeldetag: 27.01.2010
(51) Int. Cl.: B64C 11/48, B64C 11/30, F02K 3/072

(54) **TRIEBWERK, INSBESONDERE CROR-ANTRIEB, FÜR EIN FLUGZEUG**
ENGINE, IN PARTICULAR CROR DRIVE, FOR AN AIRCRAFT
GROUPE DE PROPULSION, EN PARTICULIER MOTEUR À ROTOR OUVERT CONTRAROTATIF (CROR) POUR AÉRONEF

(30) Priorität: 31.01.2009 DE 102009007013
(43) Veröffentlichungstag der Anmeldung: 07.12.2011
(73) Patentinhaber: Deutsches Zentrum für Luft- und Raumfahrt e.V., 51147 Köln (DE)
(72) Erfinder: STÜRMER, Arne, 38106 Braunschweig (DE)
(74) Vertreter: Rehberg Hüppe + Partner
(86) Internationale Anmeldenummer: PCT/EP2010/050950
(87) Internationale Veröffentlichungsnummer: WO 2010/086338

(56) Entgegenhaltungen:
- WO-A2-2008/096124
- US-A- 4 883 240
- US-A1- 2006 097 103
- MAGLIOZZI B: "Noise Characteristics of a Model Counterrotating Prop-Fan" AIAA 11TH AEROACOUSTICS CONFERENCE, SUNNYVALE, CALIFORNIA, Bd. 11TH, Nr. AIAA-87-2656, 19. Oktober 1987 (1987-10-19), Seiten 1-13, XP002486865
- DITTMAR JAMES H: "SOME DESIGN PHILOSOPHY FOR REDUCING THE COMMUNITY NOISE OF ADVANCED COUNTER-ROTATION PROPELLERS" NASA TECHNICAL MEMORANDUM, SCIENTIFIC AND TECHNICAL INFORMATION, HANOVER, MD, US, Bd. TM-87099, 1. August 1985 (1985-08-01), Seite 27PP, XP009118109 ISSN: 0499-9320

## Beschreibung

### TECHNISCHES GEBIET DER ERFINDUNG

Die Erfindung bezieht sich auf einen CROR-Antrieb für ein Flugzeug, der die Merkmale des Oberbegriffs des unabhängigen Patentanspruchs 1 aufweist, wobei die Rotorachse der Rotoren in Reiseflugrichtung ausgerichtet ist.

Die voranstehende Definition soll nicht bedeuten, dass die Rotorachse exakt parallel zu der Reiseflugrichtung gegenüber der Struktur des jeweiligen Flugzeugs ausgerichtet sein muss, für das der CROR-Antrieb vorgesehen ist. Zudem ergibt sich über die verschiedenen Betriebszustände eines Flugzeugs eine Variation des Anstellwinkels der Rotorachse zur Reiseflugrichtung. Der Anstellwinkel der Rotorachse zur Reiseflugrichtung bleibt aber regelmäßig klein und immer kleiner als 45°, in der Regel kleiner als 15°. Bei der vorliegenden Erfindung ist es auch nicht ausgeschlossen, aber keinesfalls zwingend, die Rotorachse des CROR-Antriebs der Reiseflugrichtung nachzuführen. Normalerweise ist die Rotorachse gegenüber der Struktur des Flugzeugs jedoch fest.

Bei als CROR-(Contra-Rotating Open Rotor-)Antrieb bezeichneten Triebwerken werden zwei offene Rotoren gegenläufig um die in Reiseflugrichtung ausgerichtete Rotorachse angetrieben.

### STAND DER TECHNIK

Flugzeuge mit Triebwerken, die mindestens einen um eine in Reiseflugrichtung ausgerichtete Rotorachse drehangetriebenen und mehrere Rotorblätter aufweisenden offenen Rotor umfassen, werden allgemein auch als Propellerflugzeuge bezeichnet und weisen zumindest im Kurzstreckenbetrieb grundsätzliche Vorteile gegenüber Düsenflugzeugen auf. Dies gilt insbesondere für Flugzeuge mit CROR-Antrieben. Propellerflugzeuge sind jedoch auch mit prinzipiellen Nachteilen verbunden. Hierzu zählt die Anregung von Schwingungen der Struktur eines Propellerflugzeugs, d. h. von Körperschall, und von Luftschall mit einer Frequenz, die sich aus dem Produkt der Blattzahl der Rotoren und deren Drehzahl ergibt, sowie mit höheren Harmonischen davon.

Bei CROR-Antrieben bilden sogenannte Interaktionstöne eine weitere Laermquelle, die durch Interaktionen der Strömung, z.B. der Blattspitzenwirbel und Blattnachlaeufe, beider Rotoren entstehen. Die Frequenzen der Interaktionstöne ergeben sich durch beliebiges Aufsummieren der Produkte der Blattzahl des jeweiligen Rotors mit seiner Drehzahl und deren hoeheren Harmonischen. Außerdem sind die Blätter von Propellern und offenen Rotoren direkt etwaigen Ungleichförmigkeiten der Zuströmung, bedingt durch Anstellwinkel- oder Installationseffekte, ausgesetzt, was zu azimuthal veränderlichen Blattlasten und damit auch zu Lärmentwicklung führt.

Bei einem bekannten Triebwerk mit mindestens einem um eine in Reiseflugrichtung ausgerichtete Rotorachse drehangetriebenen und mehrere Rotorblätter aufweisenden Rotor, wobei mindestens ein den Vortrieb des Rotors beeinflussender geometrischer Parameter der Rotorblätter veränderbar ist, dient die Veränderbarkeit des geometrischen Parameters, der den Vortrieb des Rotors beeinflusst, dazu, um neben der Drehzahl des Rotors eine weitere Variable zur Einstellung des Schubs des Treibwerks zur Verfügung zu haben. Dabei wird der den Vortrieb des Rotors beeinflussende geometrische Parameter bei alen Rotorblättern eines Rotors gleichzeitig verstellt, und dies erfolgt mit einer verglichen mit der Drehzahl des Rotors sehr niedrigen Frequenz. In der Regel handelt es sich bei dem den Vortrieb des Rotors beeinflussenden geometrischen Parameter um den Anstellwinkel der Rotorblätter zu ihrer Rotationsebene um die Rotorachse.

Bei CROR-Antrieben ist es bekannt, dass eine Reihe von Entwurfsparametern Einfluss auf die Lärmentwicklung hat, indem die Interaktion des hinteren Rotors mit den Blattspitzenwirbeln und Blattnachlaeufen des vorderen Rotors reduziert wird. Hierzu zählen der Abstand zwischen den beiden Rotoren, die Belastung insbesondere des vorderen Rotors, ein reduzierter Durchmesser des hinteren Rotors und die Drehzahlen bzw. die daraus resultierenden Blattspitzengeschwindigkeiten der Rotoren (Siehe z. B. (WO 2008/096124 und US 4,883,240). Diese Maßnahmen zur Lärmreduktion führen jedoch meist zu einer Reduktion der Leistung und/oder der Effizienz des Triebwerks. Daher muss bislang immer ein Kompromiss zwischen Leistung und Lärmemission gefunden werden.

Eine periodische Verstellung des Anstellwinkels der einzelnen Rotorblätter eines Rotors ist von Hubschraubern bekannt und bei diesen Voraussetzung für eine Bewegung quer zu der im Wesentlichen vertikal ausgerichteten Rotorachse.

Aus der US 2006/0097103 A1 ist ein integriertes Vortriebs- und Lenksystem für ein Luftfahrzeug bekannt, das einen angetriebenen Propeller aufweist, um eine Vortriebskraft zu erzeugen. Ein oder mehrere Propellerblätter sind drehbar an der Nabe des Propellers gelagert. Ein Steuersignal wird bereitgestellt, um die Blattneigung der drehbaren Blätter einzustellen, während die Blätter rotieren. Die Änderung der Blattneigung, während die Blätter rotieren, erzeugt ein Drehmomentungleichgewicht, das verwendet werden kann, um die Richtung des Fahrzeugs zu steuern. Konkret wird ein oder werden mehrere Propellerblätter in einer beispielsweise sinusförmigen oder sägezahnförmigen Weise derart betätigt, dass eine Betätigungsperiode nach einem Umlauf des Blatts abgeschlossen ist, während die verbleibenden Blätter nicht betätigt werden.

Aus der DE 202 20 134 U1 ist eine dynamische Pitch-Steuerung für Windenergieanlagen bekannt. Durch die Integration von Sensoren in die Rotorblätter einer Windenergieanlage wird die Energieaufnahme der einzelnen Rotorblätter ermittelt. Auf Basis dieser Daten wird eine gezielte Verstellung des Pitch-Winkels, d. h. des Anstellwinkels, der einzelnen Rotorblätter zur Beeinflussung der Energieaufnahme jedes einzelnen Rotorblatts vorgenommen. Hierdurch wird die Krafteinleitung in den Antriebsstrang der Windenergieanlage über die gesamte von den Rotorblättern überstrichene Fläche gleichmäßiger verteilt.

### AUFGABE DER ERFINDUNG

Der Erfindung liegt die Aufgabe zugrunde, einen CROR-Antrieb aufzuzeigen, bei dem eine mit der Leistung oder der Effizienz zunehmende bzw.eine durch Installationseffekte bedingte Lärmentwicklung verhindert oder verringert wird.

### LÖSUNG

Erfindungsgemäß wird diese Aufgabe durch einen CROR-Antrieb mit den Merkmalen des unabhängigen Patentanspruchs 1 gelöst. Die abhängigen Patentansprüche 2 bis 10 betreffen bevorzugte Ausführungsformen des neuen CROR-Antriebs. Der Patentanspruch 11 ist auf ein Flugzeug mit einem neuen CROR-Antrieb in Pusher-Konfiguration gerichtet.

### BESCHREIBUNG DER ERFINDUNG

Bei dem neuen CROR-Antrieb wird der veränderbare und den Vortrieb zumindest des hinteren Rotors beeinflussende geometrische Parameter der Rotorblätter von einer Steuerung mit mindestens einer Frequenz periodisch verändert, die ihrerseits mindestens so groß ist wie die Drehzahl des Rotors. Das heißt, die Veränderung des geometrischen Parameters der Rotorblätter erfolgt bei dem neuen CROR-Antrieb viel schneller als dies notwendig und sinnvoll ist, um den Rotor an unterschiedliche Betriebszustände des CROR-Antriebs anzupassen, beispielsweise um ihn für die Bereitstellung eines unterschiedlich großen Schubs zu optimieren. Bei der vorliegenden Erfindung wird bei jedem Rotorblatt der den Vortrieb des Rotors beeinflussende geometrische Parameter über jeden Umlauf des Rotorblatts um die Rotorachse mindestens einmal geändert und wieder auf seinen Ausgangswert zurückgeführt. Grundsätzliches Ziel ist es dabei, instationäre Blattlasten an den Rotorblättern zu verhindern, durch die Schwingungen, insbesondere Lärm, angeregt werden können. Dies wird im Prinzip dadurch erreicht, dass unterschiedliche Anströmungen des einzelnen Rotorblatts über seine verschiedenen Drehstellungen um die Rotorachse durch Variationen des den Vortrieb beeinflussenden geometrischen Parameters derart kompensiert werden, dass die Last auf das jeweilige Rotorblatt möglichst konstant gehalten wird.

Dabei hängt die Frequenz, mit der die Steuerung den geometrischen Parameter zur Konstanthaltung der Last verändern muss, von den Besonderheiten des CROR-Antriebs im Einzelfall ab. Regelmäßig ist sie genauso groß wie die Drehzahl des Rotors oder beträgt ein Vielfaches davon.

Konkret kann die Steuerung den geometrischen Parameter bei den einzelnen Rotorblättern abhängig von deren Winkellage relativ zu einer Aufhängung des CROR-Antriebs verändern. Der Ort der Aufhängung des CROR-Antriebs beeinflusst durch die Aufhängung selbst bzw. die dadurch resultierende Lage des CROR-Antriebs relativ beispielsweise zu einem Tragflügel des jeweiligen Flugzeugs die Anströmungsverhältnisse des Rotors und insbesondere die Verteilung unterschiedlicher Anströmungen über den Umfang des Rotors. Ein diesbezüglich bekanntes Phänomen ist das durch die Rotorblätter induzierte Flügelkastenbrummen bei Propellermaschinen, wenn die Rotorblätter aufeinanderfolgend durch den Bereich vor der Überdruckseite und der Unterdruckseite des Tragflügels hindurch treten. Auch dieses Flügelkastenbrummen kann mit der vorliegenden Erfindung reduziert, wenn nicht gar beseitig werden.

Es wurde bereits angesprochen, dass die Steuerung den geometrischen Parameter vorzugsweise so verändert, dass auf die Rotorblätter einwirkende instationäre Kräfte minimiert werden. Dazu können an den Rotorblättern entsprechende Kraftsensoren vorgesehen sein, deren Signal der Steuerung als von dieser konstant zu haltenden Größe zugeführt wird. Die Steuerung ist in diesem Fall eine Regelung zum Konstanthalten dieser Signale.

Die Steuerung kann auch so ausgelegt sein, dass sie einen sekundären Effekt der instationären Anströmung der Rotorblätter minimiert, indem sie den geometrischen Parameter so variiert, dass Anregungen von Luft- oder Körperschall durch den Rotor minimiert werden. In diesem Fall sind entsprechende Schwingungssensoren zur Erfassung des jeweiligen Schalls vorzusehen, deren Signale der Steuerung zugeführt wird. Hier ist dann die Steuerung eine Regelung, die die zugeführten Signale minimiert.

Die Steuerung kann den geometrischen Parameter zusätzlich auch bei dem vorne liegenden Rotor variieren.

Besonders günstige Verhältnisse zur Anwendung der vorliegenden Erfindung bei einem CROR-Antrieb liegen dann vor, wenn die Blattzahlen der beiden Rotoren gleich groß sind. In diesem Fall kann die Steuerung den geometrischen Parameter bei allen Rotorblättern des hinten liegenden Rotors jeweils gleichzeitig verändern, um die aufgrund der Rotorblätter des vorne liegenden Rotors variierende Anströmung der Rotorblätter des hinten liegenden Rotors zu kompensieren.

Es ist grundsätzlich bevorzugt, wenn die Steuerung den den Vortrieb beeinflussenden geometrischen Parameter zumindest bei dem hinteren Rotor in Abhängigkeit von der relativen Winkellage der beiden Rotoren verändert, weil diese relative Winkellage den Einfluss der Anströmung der Rotorblätter des hinteren Rotors durch die Rotorblätter des vorderen Rotors bestimmt. Die Frequenz, mit der die Steuerung den den Vortrieb beeinflussenden geometrischen Parameter verändert, ist bei einem CROR-Antrieb insbesondere mindestens 2n-mal so groß wie die Drehzahl des Rotors, wobei n die Blattzahl des vorderen Rotors ist. Absolut liegt die Frequenz, mit der die Steuerung den geometrischen Parameter verändert, in einem typischen Bereich von 10 bis 250 Hz.

Der den Vortrieb beeinflussende geometrische Parameter kann insbesondere der Anstellwinkel des jeweiligen Rotorblatts sein, der auch als "Pitch" bezeichnet wird. Es kann sich aber auch um die Verdrillung des jeweiligen Rotorblatts oder den Profilverlauf des Rotorblatts handeln, soweit diese/dieser jeweils bei den Rotorblättern des Rotors veränderbar ist.

In einer konkreten Ausführungsform eines Flugzeugs mit einem erfindungsgemäßen CROR-Antrieb ist dieser in Pusher-Konfiguration vorgesehen. Dabei können durch einen Pylon, an dem der CROR-Antrieb aufgehängt ist, variierende Anströmungen der Rotorblätter beider Rotoren des CROR-Antrieb ebenfalls durch eine erfindungsgemäße Variation des den Vortrieb der Rotorblätter beeinflussenden geometrischen Parameters so kompensiert werden, dass hierdurch keine Schwingungen, insbesondere Lärm, induziert werden.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den abhängigen Patentansprüchen aufgeführte Merkmale für weitere Ausführungsformen der Erfindung entfallen.

### KURZBESCHREIBUNG DER FIGUREN

Die Erfindung wird im Folgenden anhand des Beispiels eines CROR-Antriebs unter Bezugnahme auf die beigefügten Figuren näher erläutert und beschrieben.
- **Fig. 1**: zeigt eine perspektivische Ansicht eines CROR-Antriebs mit zwei Rotoren mit jeweils acht Rotorblättern.
- **Fig. 2**: zeigt eine Seitenansicht des CROR-Antriebs gemäß Fig. 1; und
- **Fig. 3**: zeigt neben einer Vorderansicht des CROR-Antriebs gemäß den Fig. 1 und 2 eine Auftragung der instationären Blattlasten über den Drehwinkel der beiden Rotoren des CROR-Antriebs.

### FIGURENBESCHREIBUNG

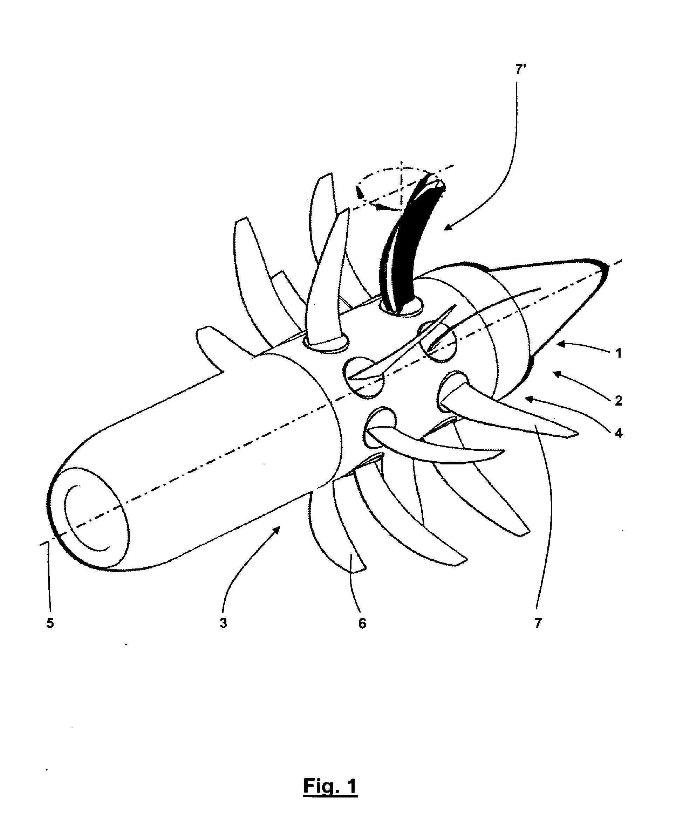

Das in **Fig. 1** gezeigte Triebwerk 1 ist ein sogenannter CROR-Antrieb 2, bei dem zwei hintereinander angeordnete Rotoren 3 und 4 um eine gemeinsame Rotorachse 5 in gegenläufigen Drehrichtungen umlaufen. Beide Rotoren 3 und 4 sind dabei offene Rotoren, bei denen die Anströmung nicht radial zu der Rotorachse 5 begrenzt ist. Beide Rotoren 3 und 4 weisen hier jeweils acht Rotorblätter 6 bzw. 7 auf. Dabei ist der Anstellwinkel 12 der einzelnen Rotorblätter, wie bei dem Rotorblatt 7' skizziert, gegenüber der Rotationsebene des jeweiligen Rotors 3 bzw. 4 mit Hilfe einer hier nicht dargestellten Steuerung veränderbar, und zwar mehrfach über jeden Umlauf der Rotorblätter um die Rotorachse 5 in Abhängigkeit von ihrem absoluten Drehwinkel um die Rotorachse 5 und dem relativen Drehwinkel der beiden Rotoren 3 und 4. Hierdurch werden instationäre Blattlasten auf die Rotorblätter 6 und 7 und hieraus resultierende Luft- und Körperschallanregungen reduziert bzw. beseitigt.

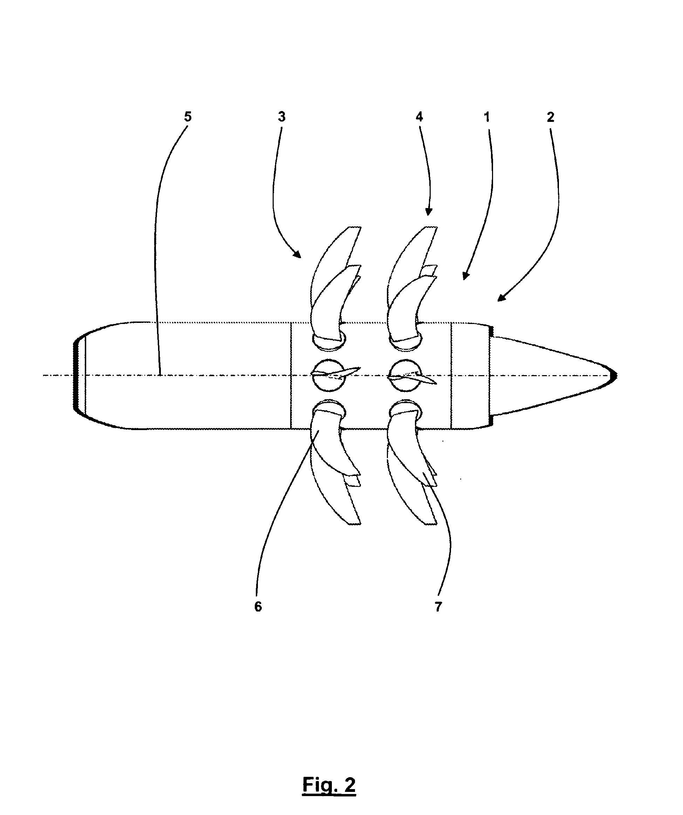

Der in **Fig. 2** in einer Seitenansicht gezeigte CROR-Antrieb 2 ist für das Anbringen an einem Flugzeug in einer Pusher-Konfiguration vorgesehen, in der er über einen vorne liegenden, hier nicht dargestellten Pylon an der Struktur des Flugzeugs befestigt ist. Durch diesen Pylon bzw. dessen Nachläufe treten instationäre Blattlasten bei den Rotorblättern 6 und 7 mit einer Frequenz die sich durch das Produkt der Drehzahl und Blattanzahl der Rotoren 3 und 4 ergibt auf, wie sie auch bei Triebwerken mit nur einem Rotor bekannt sind. Durch die wechselweise Beeinflussung der Strömung der Rotoren 3 und 4 treten darüber hinaus instationäre Lasten mit der 2n-fachen Frequenz der Drehzahl der Rotoren 3 und 4 auf, und zwar insbesondere an den Rotorblättern 7 des hinteren Rotors 4, aber auch an den Rotorblättern 6 des vorderen Rotors 3.

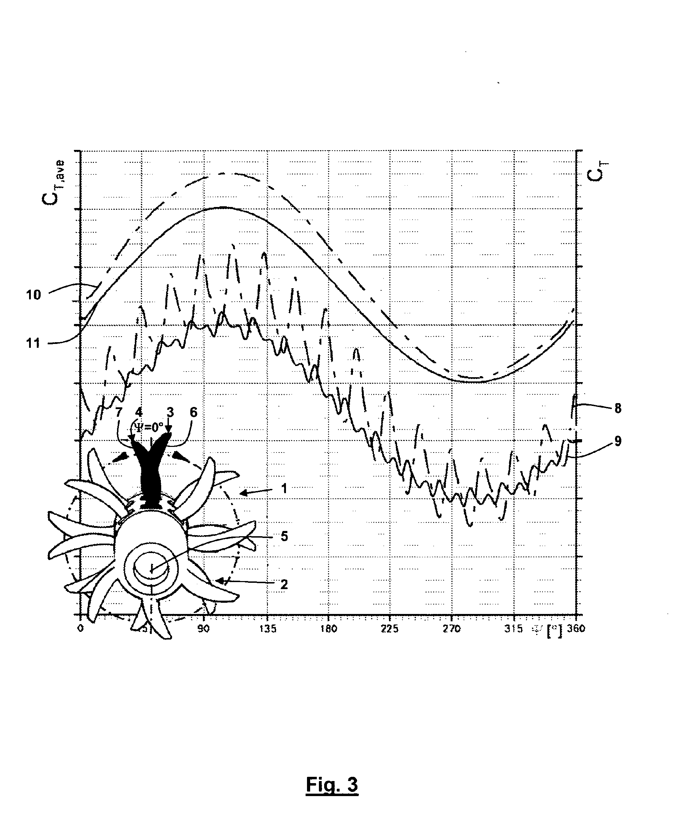

Diese instationären Blattlasten sind in **Fig. 3** für jeweils ein Rotorblatt über dem Drehwinkel Ψ um die Rotorachse 5 aufgetragen. Die Kurve 8 gibt dabei die Blattlasten für ein Rotorblatt 6 des vorderen Rotors 3 wieder, während die Kurve 9 die Blattlasten für ein Rotorblatt 7 des hinteren Rotors 4 wiedergibt. Die Kurven 10 und 11 zeigen den Verlauf der Mittelwerte der Kurven 8 und 9. die Schwankungen der Kurven 8 und 9 zeigen, dass die instationären Blattlasten an dem hinteren Rotor 4 größer sind, aber grundsätzlich dieselbe Frequenz wie die instationären Blattlasten an dem vorderen Rotor 3 aufweisen, was hier auf die gleiche Blattzahl der Rotoren 3 und 4 zurückzuführen ist. Dem überlagert ist eine Schwankung der Blattlasten, die durch die Kurven 10 und 11 wiedergegeben wird, die beispielsweise auf einen Pylon zur Aufhängung des Triebwerks 1 oder aber einen Anstellwinkel der Drehachse gegenüber der Anströmung zurückgeht. Alle instationären Anteile der Blattlasten können minimiert werden, indem erfindungsgemäß ein den Vortrieb der einzelnen Rotorblätter 6 bzw. 7 beeinflussender Parameter, wie der Anstellwinkel des Rotorblatts 7' gemäß Fig. 1 von der hier nicht dargestellten Steuerung mit der Frequenz der instationären Anteile so variiert wird, dass im Fall einer überdurchschnittlichen Blattlast der Parameter zu einem kleineren Vortrieb hin geändert wird und umgekehrt.

Die Realisation der vorliegenden Erfindung kann auf einer bei den meisten Triebwerken sowieso vorhandenen Verstellung des Anstellwinkels (Pitch) der Rotorblätter basieren. Für die Realisation der vorliegenden Erfindung ist es jedoch zumindest erforderlich, dass diese Verstellbarkeit hochfrequent möglich ist. Vielfach ist es auch nötig, dass diese Verstellbarkeit für die einzelnen Rotorblätter zu unterschiedlichen Zeitpunkten möglich ist. Gerade im Fall eines CROR-Antriebs gibt es jedoch auch Ausführungsformen der vorliegenden Erfindung, bei denen alle Rotorblätter eines Rotors synchron verstellt werden (siehe oben) und deshalb bezüglich ihres den Vortrieb verändernden Parameters nicht getrennt voneinander ansteuerbar sein müssen.

### BEZUGSZEICHENLISTE

- 1: Triebwerk
- 2: CROR-Antrieb
- 3: Rotor
- 4: Rotor
- 5: Rotorachse
- 6: Rotorblatt
- 7: Rotorblatt
- 8: Kurve
- 9: Kurve
- 10: Kurve
- 11: Kurve
- 12: Anstellwinkel

## Patentansprüche

1. CROR-Antrieb für ein Flugzeug, mit zwei gegenläufig um eine in Reiseflugrichtung ausgerichtete gemeinsame Rotorachse (5) drehangetriebenen und jeweils mehrere Rotorblätter (6, 7) aufweisenden offenen Rotoren (3, 4), wobei mindestens ein den Vortrieb eines der Rotoren (3, 4) beeinflussender geometrischer Parameter der Rotorblätter (6, 7) dieses Rotors (3, 4) veränderbar ist, **dadurch gekennzeichnet, dass** eine Steuerung vorgesehen ist, die den geometrischen Parameter zumindest bei den Rotorblättern (7) des hinten liegenden Rotors (4) mit mindestens einer Frequenz periodisch verändert, die mindestens so groß ist wie die Drehzahl des hinten liegenden Rotors (4).

2. CROR-Antrieb nach Anspruch 1, **dadurch gekennzeichnet, dass** die Frequenz, mit der die Steuerung den geometrischen Parameter periodisch verändert, ein Vielfaches der Drehzahl des Rotors (3, 4) beträgt.

3. CROR-Antrieb nach Anspruch 1 oder 2, **dadurch gekennzeichnet, dass** die Steuerung den geometrischen Parameter bei den einzelnen Rotorblättern (6, 7) abhängig von ihrer Winkellage relativ zu einer Aufhängung des Triebwerks (1) verändert.

4. CROR-Antrieb nach einem der Ansprüche 1 bis 3, **dadurch gekennzeichnet, dass** an den Rotorblättern (6, 7) Kraftsensoren vorgesehen sind, deren Signal der Steuerung zugeführt werden, und dass die Steuerung den geometrischen Parameter so verändert, dass die Signale von den Kraftsensoren konstant gehalten werden.

5. CROR-Antrieb nach einem der Ansprüche 1 bis 4, **dadurch gekennzeichnet, dass** Schwingungssensoren zur Erfassung von Luft- und/oder Körperschall vorgesehen sind, deren Signal der Steuerung zugeführt werden, und dass die Steuerung den geometrischen Parameter so variiert, dass die Signale von den Schwingungssensoren minimiert werden.

6. CROR-Antrieb nach nach einem der Ansprüche 1 bis 5, **dadurch gekennzeichnet, dass** die Blattzahlen der beiden Rotoren (3 und 4) gleich groß sind und dass die Steuerung den geometrischen Parameter bei allen hinten liegenden Rotoren gleichzeitig verändert.

7. CROR-Antrieb nach einem der Ansprüche 1 bis 6, **dadurch gekennzeichnet, dass** die Steuerung den geometrischen Parameter in Abhängigkeit von der relativen Winkellage der beiden Rotoren (3 und 4) verändert.

8. CROR-Antrieb nach einem der Ansprüche 1 bis 7, **dadurch gekennzeichnet, dass** die Frequenz, mit der die Steuerung den geometrischen Parameter verändert, mindesten 2n-mal so groß ist wie die Drehzahl der Rotoren (3 und 4), wobei n die Blattzahl des vorderen Rotors (3) ist.

9. CROR-Antrieb nach Anspruch 8, **dadurch gekennzeichnet, dass** die Frequenz im Bereich von 10 bis 250Hz liegt.

10. CROR-Antrieb nach einem der Ansprüche 1 bis 9, **dadurch gekennzeichnet, dass** der geometrische Parameter aus der Gruppe ausgewählt ist, die den Anstellwinkel (12), die Verdrillung und den Profilverlauf des jeweiligen Rotorblatts (6, 7) umfasst.

11. Flugzeug mit einem CROR-Antrieb nach einem der Ansprüche 1 bis 10, **dadurch gekennzeichnet, dass** der CROR-Antrieb (2) in Pusher-Konfiguration angeordnet ist.

## Claims

1. CROR-engine for an aircraft comprising two open rotors (3, 4) driven in opposite directions about a common rotor axis (5) oriented in cruise flight direction, and each having a plurality of rotor blades (6, 7), wherein at least one parameter of the rotor blades (6, 7) of one of the rotors (3, 4) influencing the propulsion of this rotor (3, 4) is variable, **characterized in that** a controller is provided which periodically varies the geometric parameter of at least the rotor blades (7) of the back rotor (4) at at least one frequency which is at least as high as the rotational frequency of the back rotor (4).

2. CROR-engine according to claim 1, **characterized in that** the frequency at which the controller periodically varies the geometric parameter is a multiple of the rotational frequency of the rotor (3, 4).

3. CROR-engine according to claim 1 or 2, **characterized in that** the controller varies the geometric parameter of the individual rotor blades (6, 7) depending on their angle position relative to an engine mount of the engine (1).

4. CROR-engine according to any of the claims 1 to 3, **characterized in that** force sensors are provided at the rotor blades (6, 7) whose signals are forwarded to the controller, and that the controller varies the geometric parameter in such a way that the signals from the force sensors are kept constant.

5. CROR-engine according to any of the claims 1 to 4, **characterized in that** vibration sensors are provided for determining air-borne and/or solid-borne noise whose signals are forwarded to the controller, and that the controller varies the geometric parameter in such a way that the signals from the vibration sensors are minimized.

6. CROR-engine according to any of the claims 1 to 5, **characterized in that** the number of blades of both rotors (3 and 4) are equal and that the controller varies the geometric parameter in all back rotors at the same time.

7. CROR-engine according to any of the claims 1 to 6, **characterized in that** the controller varies the geometric parameter depending on the relative angle position of the two rotors (3 and 4).

8. CROR-engine according to any of the claims 1 to 7, **characterized in that** the frequency at which the controller varies the geometric parameter is at least 2n times as high as the rotational frequency of the rotors (3 and 4), n being the number of blades of the front rotor (3).

9. CROR-engine according to claim 8, **characterized in that** the frequency is in a range from 10 to 250 Hz.

10. CROR-engine according to any of the claims 1 to 9, **characterized in that** the geometric parameter is selected from the group including the pitch angle (12), the torsion and the airfoil shape distribution of the respective rotor blade (6, 7).

11. Aircraft comprising a CROR-engine according to any of the claims 1 to 10, **characterized in that** the CROR-engine (2) is arranged in pusher configuration.

## Revendications

1. Moteur à rotor ouvert contrarotatif (CROR) pour aéronef comprenant deux rotors ouverts (3, 4) entraînés en rotation dans des sens opposés autour d'un axe de rotor commun (5) orienté dans la direction de vol et présentant chacun plusieurs pales de rotor (6, 7), dans lequel au moins un paramètre géométrique des pales de rotor (6, 7) influençant la propulsion d'un des rotors (3, 4) de ce rotor (3, 4) peut être modifié, **caractérisé en ce qu'**il est prévu une commande qui modifie périodiquement le paramètre géométrique au moins au niveau des pales de rotor (7) du rotor (4) situé à l'arrière à au moins une fréquence qui est au moins équivalente à la vitesse de rotation du rotor (4) situé à l'arrière.

2. Moteur à CROR selon la revendication 1, **caractérisé en ce que** la fréquence à laquelle la commande modifie périodiquement le paramètre géométrique s'élève à un multiple de la vitesse de rotation du rotor (3, 4).

3. Moteur à CROR selon la revendication 1 ou 2, **caractérisé en ce que** la commande modifie le paramètre géométrique au niveau des pales de rotor (6, 7) individuelles en fonction de leur position angulaire par rapport à une suspension du groupe de propulsion (1).

4. Moteur à CROR selon l'une des revendications 1 à 3, **caractérisé en ce qu'**il est prévu sur les pales de rotor (6, 7) des capteurs de force, dont les signaux sont transmis à la commande, et **en ce que** la commande modifie le paramètre géométrique de telle sorte que les signaux des capteurs de force sont maintenus constants.

5. Moteur à CROR selon l'une des revendications 1 à 4, **caractérisé en ce qu'**il est prévu des capteurs de vibrations destinés à déterminer le bruit aérien et/ou le bruit de structure, dont les signaux sont transmis à la commande, et **en ce que** la commande modifie le paramètre géométrique de telle sorte que les signaux des capteurs de vibrations sont minimisés.

6. Moteur à CROR selon l'une des revendications 1 à 5, **caractérisé en ce que** le nombre de pales des deux rotors (3 et 4) est identique et **en ce que** la commande modifie le paramètre géométrique en même temps pour tous les rotors situés à l'arrière.

7. Moteur à CROR selon l'une des revendications 1 à 6, **caractérisé en ce que** la commande modifie le paramètre géométrique en fonction de la position angulaire rotative des deux rotors (3 et 4).

8. Moteur à CROR selon l'une des revendications 1 à 7, **caractérisé en ce que** la fréquence à laquelle la commande modifie le paramètre géométrique correspond à au moins 2 n fois la vitesse de rotation des rotors (3 et 4), étant entendu que n est le nombre de pales du rotor avant (3).

9. Moteur à CROR selon la revendication 8, **caractérisé en ce que** la fréquence se situe dans une marge de 10 à 250 Hz.

10. Moteur à CROR selon l'une des revendications 1 à 9, **caractérisé en ce que** le paramètre géométrique est choisi parmi le groupe qui comprend l'angle d'attaque (12), le vrillage et le profil d'écoulement de la pale de rotor (6, 7) respective.

11. Aéronef comprenant un moteur à CROR selon l'une des revendications 1 à 10, **caractérisé en ce que** le moteur à CROR (2) est agencé dans une configuration de propulsion.
